# EUROPEAN PATENT APPLICATION

(11) **EP 1 840 820 A1**
(43) Date of publication of application: **03.10.2007**
(21) Application number: 06111823.8
(22) Date of filing: 28.03.2006
(51) Int. Cl.: G06T 3/60

(54) **Method and apparatus for transforming images to accommodate screen orientation**

(71) Applicant: Research In Motion Limited, Waterloo, Ontario N2L 3W8 (CA)
(72) Inventor: Bylsma, Rodney, Kanata Ontario K2M 2W2 (CA); Shah, Beejal, Kanata Ontario K1K 2W1 (CA)
(74) Representative: Rickard, David John

(57) **Abstract**

A method and apparatus for transforming a display image on a display from a first orientation to a second orientation, the method having the steps of: breaking up the display image into multiple sub-images; and transforming each of the multiple sub-images individually, the transforming step including selecting a pixel, determining a transformed location for the pixel, and writing the pixel to a display buffer.

## Description

The present application relates to a method and device for transforming images between a first orientation and a second orientation, and in particular relates to the improved transformation to reduce cache misses on a mobile device.

As mobile devices and mobile data devices become more complex, one option being introduced by device manufacturers is to include client software on the mobile device. Specifically, the mobile device manufacturer can create hardware and some software for the mobile device to operate. However, a different software maker can provide specialized software, such as e-mail applications, calendar applications and other data or non-data functionality.

In operation, the mobile device provides a platform for running the client software, which when integrated with the third party mobile device, provides an enhanced experience for the user.

Client software can, in some cases, be designed for a particular display orientation. For example, a typical device that the client resides on could have the display oriented in a landscape orientation over a keyboard. The device may expect to write to a display in this way and the addressing of output to the display is configured for this orientation.

If the client software is however provided on a device in which the display is oriented in a different orientation to that expected from the client, modifications to the client need to be made. One option is to change the client itself to accommodate the differently oriented display. This is however an onerous task and undesirable from a software creation perspective. A better solution is to provide a transformation function between the output from the client and the display in order to ensure that contents are displayed in the correct orientation.

Transformation functions often take a row of data from the first orientation and transfer it into a column in the second orientation. The problem with this is that it is relatively data intensive and can cause cache misses when the cache overflows. These cache misses require reloading of the data and delay the overall transformation.

The present method and device may overcome the disadvantages of the prior by breaking an image into smaller pieces to reduce cache misses and then performing a transformation on these smaller portions. Rather than transforming and updating the entire image as a whole, the smaller images ensure that cache misses are avoided and can thereby speed up the entire transformation process.

In a preferred embodiment, an image on a mobile device may be broken up into slices and each of these areas are transformed separately. However, other configurations, such as quadrants or even smaller images are possible depending on the screen size being transformed and the cache size of the device.

The present application therefore preferably provides a method for transforming a display image from a first orientation to a second orientation, the method comprising the steps of: breaking up the display image into multiple sub-images; and transforming each of said multiple sub-images individually, said transforming step including selecting a pixel, determining a transformed location for said pixel, and writing the pixel to a display buffer.

The present application further preferably provides a mobile device adapted to transform a display image from a first orientation to a second orientation, the mobile device having a radio subsystem including a radio adapted to communicate with a network; a radio processor having a digital signal processor and adapted to interact with said radio subsystem; memory; a user interface; a processor adapted to run user applications and interact with the memory, the radio and the user interface and adapted to run applications, the mobile device characterized by having means for: breaking up the display image into multiple sub-images; and transforming each of said multiple sub-images individually, said transforming step including selecting a pixel, determining a transformed location for said pixel, and writing the pixel to a display buffer.

### BRIEF DESCRIPTION OF THE DRAWINGS

The present application will be better understood with reference to the drawings, in which:
**Figure 1** is a schematic view of an exemplary mobile device;
**Figure 2** is a schematic view of a display showing a first row of cache lines oriented for a landscape format addressing;
**Figure 3** is an exemplary display showing a first row of cache lines in which the pixels are configured to be oriented in a portrait format;
**Figure 4** is an exemplary display showing a first row of cache lines in which the pixels are configured to be oriented in a landscape format, with the display broken down into multiple images;
**Figure 5** is an exemplary display showing a first row of cache lines in which the pixels are configured to be oriented in a portrait format, with the display broken down into multiple images;
**Figure 6** is an exemplary display showing a first row of cache lines in which the pixels are configured to be oriented in a landscape format, with the display broken down into multiple images;
**Figure 7** is an exemplary display showing a first row of cache lines in which the pixels are configured to be oriented in a portrait format, with the display broken down into multiple images;
**Figure 8** is a flow chart of a method of the present application;
**Figure 9** is an alternative method where the number of images a display is to be broken into is determined prior to a transformation;
**Figure 10** is a schematic view of an exemplary client/host architecture of a mobile device that can be used in accordance with a preferred embodiment; and
**Figure 11** is a schematic view of the mobile device of **Figure 10.**

### DESCRIPTION OF PREFERRED EMBODIMENTS

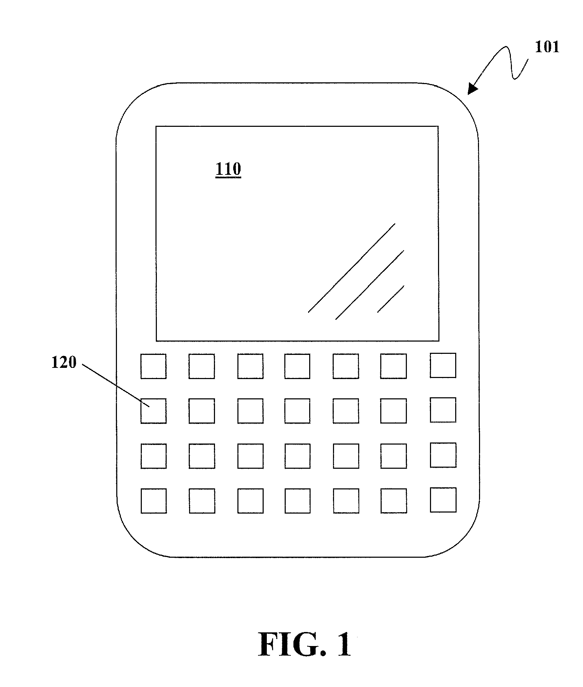

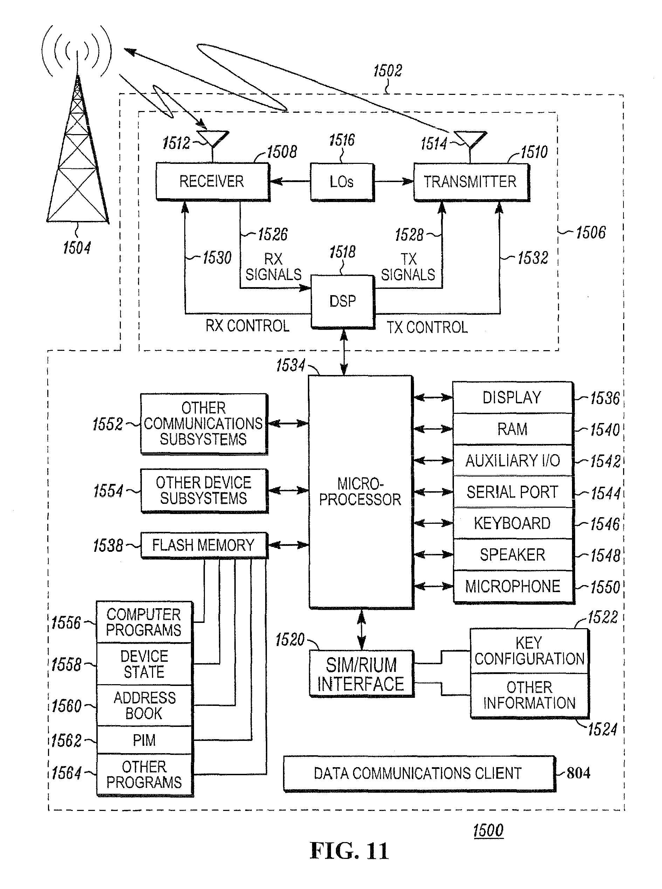

Reference is now made to **Figure 1. Figure 1** illustrates an exemplary mobile device **101** having a display **110** and a keyboard **120.** A more detailed description of an exemplary mobile device is presented below with regard to **Figure 11.**

Depending on the hardware within mobile device **101,** display **110** can be configured to be refreshed in a landscape mode or a portrait mode. This can cause problems for software that is written with a specific display format for its output.

For example, a client can be added to the mobile device **101** that would provide for certain data functions to be performed by mobile device **101.** This software can be configured to output to a display **110** in which display **110** is oriented in, for example, a landscape mode and the base pixel is located at the top left hand corner of the display.

When the same piece of software is put onto a second mobile device in which the hardware is adapted to output to a display **110** configured in a different orientation, for example a portrait mode, the software output will not be able to be displayed properly unless a transformation is performed.

Similarly, some mobile device manufacturers allow a user to change the orientation of a mobile device display **110** at run time, and this change in orientation requires a transformation to be performed.

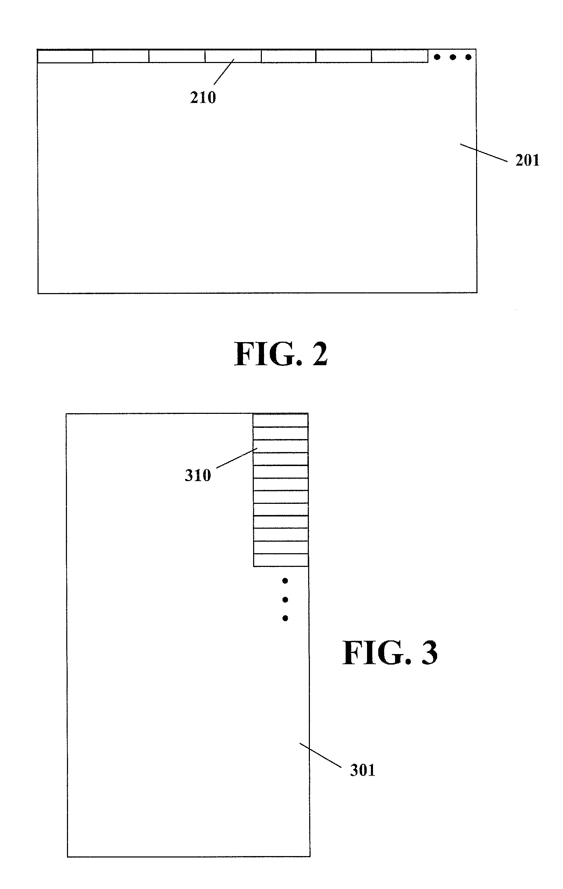

Reference is made to **Figure 2. Figure 2** shows an exemplary display image **201** with a partial first row of cache lines **210** illustrated. As will be appreciated, rather than reading a single word or byte from memory at a time, each cache entry usually holds a certain number of words, known as a "cache line", and a whole line is read and cached at once. Each cache line **210** will contain several pixels depending on the size of a pixel. Further, each cache line will correspond with a "line" in the display buffer, as explained below.

Each pixel has a specific data size depending on color configuration for the mobile device. For example if the display is black and white, each pixel may be represented by 1 bit. A display with 256 colors will require 8 bits for each pixel. A display with more colors will require more bits to represent each pixel. The size of each pixel will determine how many pixels fit into a cache line.

In one embodiment, display image **201** is 320 pixels by 240 pixels. Other display image sizes are possible.

**Figure 3** shows a display image **301** in which the hardware is configured to refresh and write to display image **301** in a portrait mode. As illustrated in the example of **Figure 3,** the pixels start at the base address in the top right hand corner of display image **301.** Display image **301** is, for example, 240 by 320 pixels.

**Figure 3** shows a partial first row of cache lines **310** having multiple pixels in this portrait mode.

In order to perform the transformation between the display image **201** of **Figure 2** and the display image **301** of **Figure 3,** a mobile device needs to perform a pixel by pixel copy of the image from a temporary (virtual) buffer to the LCD device frame buffer. The LCD device frame buffer is the buffer the LCD display uses to refresh itself and would ordinarily be the buffer the software writes its output to. However, since the screen orientation is different here, the software instead writes to a virtual buffer first. A transformation then needs to be performed between the virtual buffer and the LCD device frame buffer.

Both the virtual buffer and LCD device frame buffer have "lines" having multiple pixels. A line is written to the display in the orientation shown for cache lines **210** and **310** in **Figures 2** and **3.** Thus, as will be appreciated, a first line for the display of **Figure 2** will contain pixels for multiple lines for the display of Figure 3, and vice versa.

The nature of the transformation between the display orientations means that read/write access to one of the buffers is not sequential. Since each line in the buffers include several pixels grouped together, the transformation requires a line from the virtual buffer to be broken into multiple lines in the LCD display buffer. For example, if a line in the virtual buffer contains eight pixels, these eight pixels will be broken into eight lines in the LCD display buffer. Further, to complete the lines in the LCD display buffer other lines from the virtual buffer will need to also be transformed. Since multiple cache lines are required to perform the transformation, cache misses are possible, causing the LCD update time to be large, which may not support animation.

To accommodate this transformation, one option is to update the hardware to allow for the cache size required for the transformation. However, since the clients' software often resides on hardware manufactured by a third party, it is not always possible to update the hardware. Further, hardware updates may be undesirable due to the expense added to a device, the redesign required, or for other reasons known to those skilled in the art. Also, a mobile device manufacturer may not want to add extra hardware such as graphics cards to just to be able to support a change in the screen orientation.

An alternative is to reduce the number of cache misses when performing the transform. The present application accomplishes this by breaking up the display into smaller sized areas, and performing a transformation on each of these areas separately.

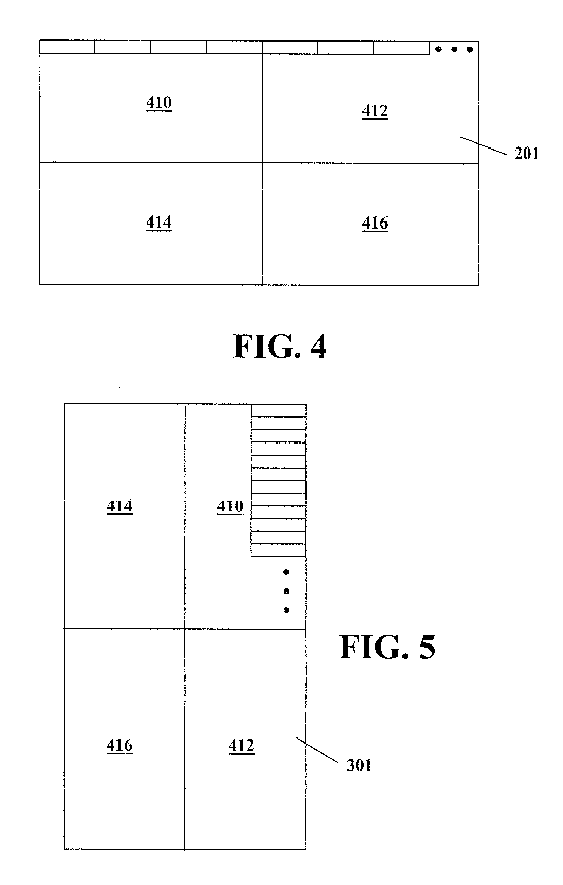

Reference is now made to **Figure 4. Figure 4** shows the display image **201** broken into four separate transformation areas (referred to herein as sub-images). Each of these sub-images **410, 412, 414** and **416,** are transformed individually and written into the corresponding sub-image **410, 412, 414** and **416** within display image **301,** as illustrated in **Figure 5.** This is accomplished by transforming each of sub-images **410, 412, 414** and **416** separately.

**Figure 4** is illustrative of one example in which the figure has been broken down into four sub-images **410, 412, 414** and **416.** The display image **201** could be broken down into other numbers of sub-images, and various factors can be used to determine the number of sub-images to break the display image **201** into. Further, multiple sub-images could be all of the same size in terms of dimensions and/or in terms of number of pixels. Alternatively, the multiple sub-images could include sub-images that have different sizes.

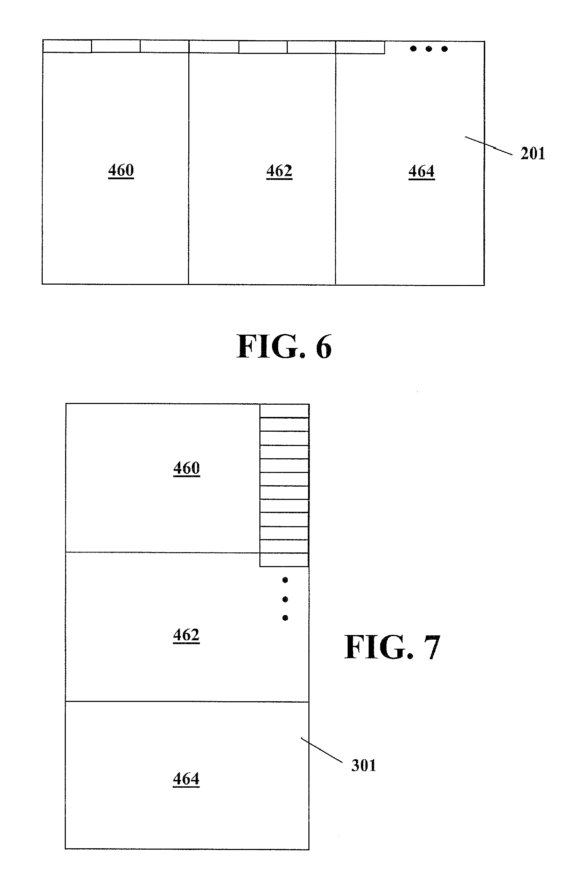

An alternative example is illustrated in **Figures 6** and **7.** Since the cache line is important in this case, the width of a sub-image is important. Thus it may not be necessary to break the image into quadrants or other number of images where there is a break in the height of the image. Instead, cache misses may be avoided by simply breaking the image into "slices".

Referring to **Figure 6,** the display image **201** is thus broken down into sub-images **460, 462** and **464.** The use of three "slices" is merely provided as an example, and one skilled in the art will realize that as few as two sub-images (i.e. the display image is cut in two) could be used, or multiple slices could be used, depending on the cache and image size.

As seen in **Figure 7,** sub-images **460, 462** and **464** are rotated for the new screen orientation for display image **301.**

It will be appreciated that the transformation could occur in the other direction, that is from display image **301** in **Figure 7** to display image **201** in **Figure 6,** if client software is written for a device having the orientation of display image **301** and the client is added to a mobile device with a the orientation of display image **201,** or if the device can orientation can be changed at run time from the display image **301** in **Figure 7** to the display image **201** in **Figure 6.**

One factor in determining the number of sub-images the display image is to be broken into is the cache size of the device. In a preferred embodiment, the display image is broken into sub-images that would fit into the cache without causing cache misses.

A second factor is the overhead required to break images down. Breaking an image into sub-images that are much smaller than the cache size when performing a transformation requires more processing overhead and does not result in fewer cache misses. The extra overhead reduces some of the benefits of the above. Specifically, if a user breaks a display down into eight separate sub-images, when a one-quarter sized sub-image would avoid cache misses, the eight separate transformations cause increased overhead and do not reduce the number of cache misses.

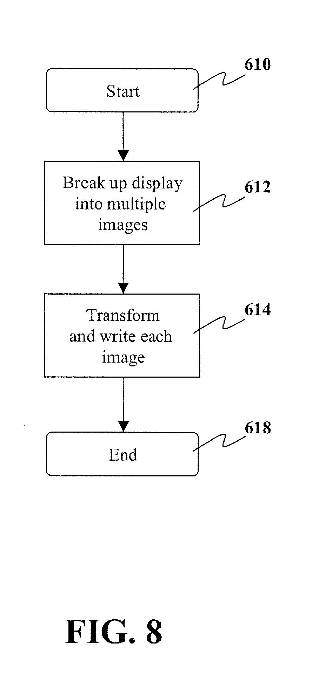

Reference is now made to **Figure 8. Figure 8** shows a flow chart of a transformation process. The process is started at starting step **610** and proceeds to step **612.** In step **612,** the present method breaks up the display image into multiple sub-images. In step **614** each of these sub-images are transformed to accommodate the differing orientation as described above.

The transformation in step **614** comprises reading a pixel from the virtual buffer containing the sub-image and determining where the pixel should be placed in the transformed image. Step **614** further includes the step of writing the pixel to the display/frame buffer (such as an LCD buffer).

In one embodiment, step **614** can include a loop for both the X and Y axes of the sub-image. Each pixel is stepped through with the two loops, and as each is read, it is written to the display/frame buffer (such as an LCD buffer). One skilled in the art will however appreciate that the order in which pixels are examined and transformed is not critical to the operation of the method of the present application.

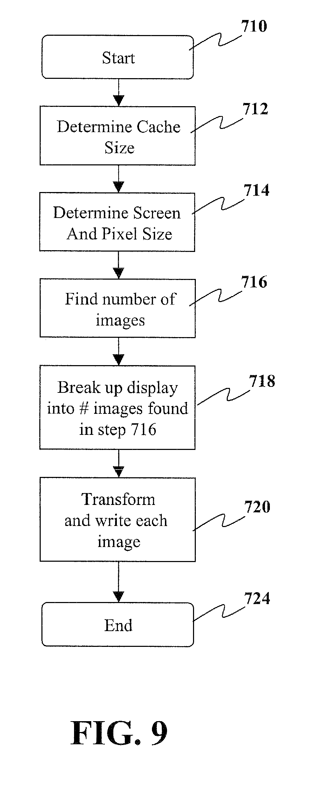

Reference is now made to **Figure 9. Figure 9** shows an alternative embodiment to that of **Figure 8** in which the number of sub-images to break the display into is chosen dynamically. Specifically, in step **710** the process is started and the cache size is determined in step **712.**

In step **714** the resolution in terms of pixel size and the size of the display is determined and, based on this and the cache size determined in step **712,** the number of sub-images that the display needs to be broken into to avoid cache misses is determined in step **716.**

Based on the number determined in step **716,** the process next proceeds to step **718** in which the display is broken into the number of sub-images found in step **716.**

From step **718** the process proceeds to step **720** in which each sub-image is transformed and written to the LCD buffer. As with the method of **Figure 8,** this is done by selecting a pixel from the virtual buffer, determining where it should be placed, and writing the pixel to the LCD buffer. This is further preferably done within 2 loops; one that loops for the size of the sub-image in the X axis and the other for the Y axis. The order of examining and transforming pixels is however not critical to the operation of the present application. One skilled in the art will also realize that the sub-image size is a fraction of the display image size. The process next proceeds to step **724** in which the process is ended.

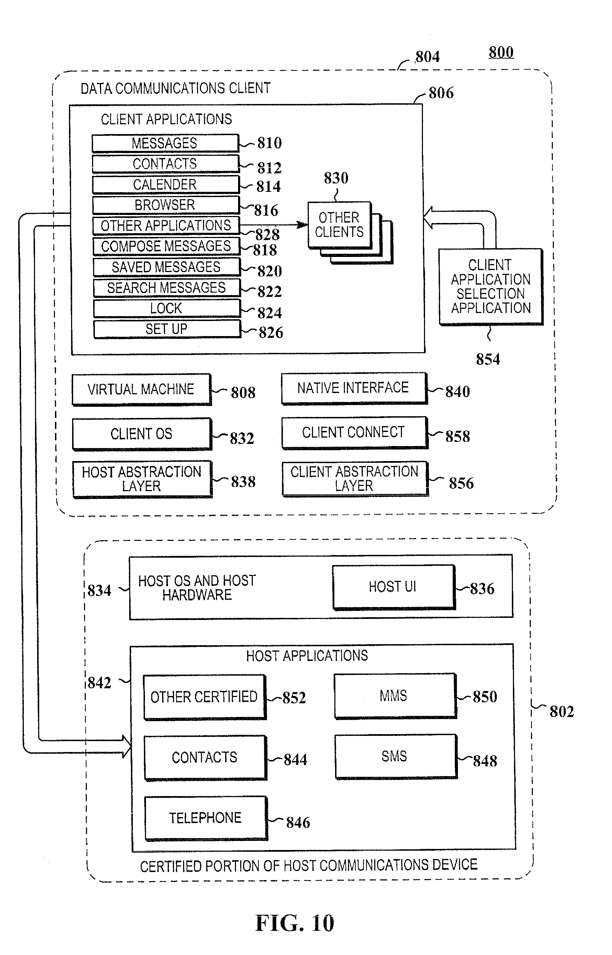

Reference is now made to **Figure 10. Figure 10** is an exemplary schematic diagram of a mobile device, and in particular the divided architecture of a third party mobile device host and client software. The mobile device includes a divided architecture **800** with a certified portion of a host communications device **802** as well as a data communications client **804.** As will be appreciated by those skilled in the art, since the host device **802** is certified, a data communications client **804** does not need to be certified in order to send and receive communications over the wireless network. Communication from data communications client **804** utilizes the certified portion of host communication device **802** to perform communication over the wireless network.

The divided architecture **800** of **Figure 10** includes client applications **806** running on top of a virtual machine **808.** The client applications **806** can be any application that is designed to run on the virtual machine **808** in the data communications client **804,** and may include a messages application **810** for viewing messages that have been received, a contacts application **812** to present an address book including phone numbers, e-mail addresses or other contact information for individuals or companies, calendar application **814** for scheduling appointments and managing time, a browser application **816** for browsing the internet or other network, a compose-message application **818** to compose messages for Short Message Service ("SMS") or e-mail, a saved-messages application **820** to view messages that have been saved, a search-messages application **822** to search for a particular message, a lock application **824** to lock the keyboard and screen of the host device, and a set-up application 826 to change the set-up configuration for the data communications client **804.** Other applications **828** could also exist as part of client applications **806** and the above-listed applications are not meant to be limiting. Further, other clients **830** besides the data communications client **804** could exist on the certified host communications device **802** and these other clients **830** could have applications which could be invoked from the other applications **828.** The virtual machine **808** is preferably started at power-up of the certified host communications device **802** and continues to run as long as the certified host communication device **802** is in operation. The virtual machine **808** may be a Java virtual machine and client applications **806** may be Java applications. All client applications **806** use the virtual machine **808** to invoke instances of objects created by the client applications **806.**

A feature call on the divided architecture **800** from the client applications **806** would normally go through a client OS **832.** The client OS **832** may include a number of primitives for interacting with host OS and host hardware **834,** which includes a host user interface **836.** However, in the case that the client applications **806** are built onto the certified host communications device **802** and because the certified host communications device **802** has already acquired certification for its host dependent features such as hardware, software and firmware utilized for communication with a network, it is preferable to have the client OS **832** interact with a host abstraction layer **838** instead of having the client OS **832** directly interacting with the features. The host abstraction layer **838** converts calls from the client applications **806** to host calls through a native interface **840.** The native interface **840** invokes host applications **842** in order to use the host dependent features on the certified host communications device **802.** The host applications **842** may include a variety of applications such as, but not limited to, a host contacts application **844** including an address book having phone numbers, e-mail addresses or other contact information for individuals or companies, a telephone-related application **846,** an SMS application **848,** a multi-media message service ("MMS") application **850,** and other certified applications **852.** These individual host applications are started within the host application **842,** and a request from the client application **806** is sent through the client OS 832 to the host abstraction layer **838** where the request is converted with the native interface **840** for the host applications **842.**

Because the host applications **842** invoke the features of the certified host communications device **802** rather than the client applications **806** directly utilizing the features, the divided architecture **800** enables the client applications **806** to run in a host environment and use the features of the certified host communications device **802** without having to re-certify. The divided architecture **800** therefore enables the uncertified client, which is the data communications client **804,** to be added to the certified host communications device **802** after certification, including an after-market addition to the certified host communications device **802.**

One example of a client application using the above described method and system includes the making of a telephone call when the certified host communications device **802** is a cellular telephone. In the host environment, making of the telephone call simply involves using the host applications **842** to create the telephone call where the host applications **842** use certified hardware, firmware and software to connect through a wireless system. However, in the client applications **806,** the above described divided architecture **800** requires invoking one of the host applications **842** in order to make the telephone call. The invoked client application could be the address book associated with the contacts application **812,** which includes phone numbers for individuals. A user may wish to select a telephone number of a particular individual from the address book associated with the contacts application **812,** and to have the cellular telephone, which is the certified host communications device **802** in this example, to make a call to that particular individual. In order to accomplish this task, the user may select the telephone number and select an option to dial that phone number. In this case, the contacts application **812** indicates through the virtual machine **808** to the client OS **832** that it needs to make a telephone call. Instead of using the host dependent feature directly from the client OS **832,** a notification is sent to the host abstraction layer **838,** which invokes an appropriate application of the host applications **842** through the native interface **840,** to make the telephone call. In this example, the invoked host application would be the telephone-related application **846,** which starts the telephone call, and the user proceeds as if the telephone call had been started from the client applications **806.**

The client applications **806** may also provide the user an option to use the SMS application **848** or the MMS application **850** to contact the individual instead of dialing the telephone number. In each of these cases, a different application of the host applications **842** is invoked, but this task is accomplished similarly through the host abstraction layer **838** and the native interface **840.** Alternatively, the messages application **810,** which includes a telephone number, may be invoked from the client applications **806.**

As one skilled in the art will realize, data is supplied between the client applications **806** and the host applications **842.** In the example above, the telephone number would be supplied to the host application **842** including the telephone-related application **846,** the SMS application **848,** and the MMS application **850.**

It is further desirable to be able to activate a selected client application of the client applications **806** from one of the host applications **842.** A client application selection application **854** uses a client abstraction layer **856** to activate an application within the client applications **806.** The client application selection application **854** calls a function that is translated in the client abstraction layer **856.** The client abstraction layer **856** then uses the virtual machine **808** to activate the selected client application of the client applications **806.** The client abstraction layer **856** may either inject the client OS **832** event into the virtual machine **808** causing the selected client application of the client applications **806** to become active or, alternatively, may perform a "reverse native call" through the client OS **832** or via a client connect **858** to manipulate the native representation of some client object causing the selected client application of the client application **806** to become active. The client connect **858** can be used for network features for the client applications **806,** which enables, for example, the data communications client **804** to communicate using a specific protocol that was not originally supported on the certified host communications device **802.** The client connect **858** involves a protocol stack to perform this communication between the data communications client **804** and the certified host communications device **802,** and increases and improves client functionality.

**Figure 11** is a block diagram **1500** of an exemplary host mobile device **1502** in wireless communication with a communication network **1504** that the present system and method may emulate. The host mobile device **1502** is preferably a two-way wireless communication device having at least voice and data communication capabilities, and preferably also has the capability to communicate with other computer systems on the Internet. Depending on the exact functionality provided, the host mobile device **1502** may be referred to as a data messaging device, a two-way pager, a wireless e-mail device, a cellular telephone with data messaging capabilities, a wireless Internet appliance, or a data communication device, as examples.

Where the host mobile device **1502** is enabled for two-way communication, it will incorporate a communication subsystem **1506,** including both a receiver **1508** and a transmitter 1510, as well as associated components such as one or more, preferably embedded or internal, a receiver antenna **1512** and a transmitter antenna **1514,** local oscillators ("LO"s) **1516,** and a processing module such as a digital signal processor ("DSP") **1518.** As will be apparent to those skilled in the field of communications, the particular design of the communication subsystem **1506** will be dependent upon the communication network in which the device is intended to operate. For example, host mobile device **1502** may include the communication subsystem **1506** designed to operate within the Mobitex™ mobile communication system, the DataTAC™ mobile communication system, General Packet Radio Service ("GPRS") network, Universal Mobile Telecommunications System ("UMTS") network, Enhanced Data for Global System for Mobile Communications ("GSM") Evolution ("EDGE") network or Code Division Multiple Access ("CDMA") network.

Network access requirements will also vary depending upon the type of network **1504.** For example, in the Mobitex and DataTAC networks, the host mobile device **1502** is registered on the communication network **1504** using a unique identification number associated with each mobile device. In UMTS and GPRS networks, and in some CDMA networks, however, network access is associated with a subscriber or user of the host mobile device **1502.** A GPRS mobile device therefore requires a subscriber identity module ("SIM") card in order to operate on a GPRS network, and a Removable User Identity Module ("RUIM") in order to operate on some CDMA networks. Although the host mobile device **1502** would not fully function without a valid SIM/RUIM card if it is a GPRS/UMTS/CDMA mobile device, local or non-network communication functions, as well as legally required functions (if any) such as "911" emergency calling, may still be available. However, the host mobile device **1502** will be unable to carry out any other functions involving communications over the communication network **1504.** A SIM/RUIM interface **1520,** which is configured to accept a SIM/RUIM card, is normally similar to a card-slot into which the SIM/RUIM card can be inserted and ejected like a diskette or a Personal Computer Memory Card International Association ("PCMCIA") card. The SIM/RUIM card can have approximately 64K of memory and hold many key configuration **1522,** and other information **1524** such as identification, and subscriber related information.

When required network registration or activation procedures have been completed, the host mobile device **1502** may send and receive communication signals over the communication network **1504.** Signals received by the receiver antenna **1512** from the communication network **1504** are input to the receiver **1508,** which may perform such common receiver functions as signal amplification, frequency down conversion, filtering, channel selection and the like, and in the example system shown in **Figure 11,** analog to digital ("A/D") conversion. A/D conversion of a received signal allows more complex communication functions such as demodulation and decoding to be performed in the DSP **1518.** In a similar manner, signals to be transmitted are processed, including modulation and encoding for example, by the DSP **1518** and input to the transmitter **1510** for digital to analog ("D/A")conversion, frequency up conversion, filtering, amplification and transmission over the communication network **1504** via the transmit antenna **1514.** The DSP **1518,** in addition to processing receive and transmit communication signals **1526** and **1528,** provides for receiver and transmitter controls **1530** and **1532.** For example, the gains applied to communication signals in the receiver **1508** and the transmitter **1510** may be adaptively controlled through automatic gain control algorithms implemented in the DSP **1518.**

The communication network **1504** may further communicate with multiple systems (not shown). For example, the communication network **1504** may communicate with both an enterprise system and a web client system in order to accommodate various clients with various service levels.

The host mobile device **1502** preferably includes a microprocessor **1534,** which controls the overall operation of the host mobile device **1502.** Communication functions, including at least data and voice communications, are performed through the communication subsystem **1506.** The microprocessor **1534** also interacts with further device subsystems such as flash memory **1536,** a display **1538,** random access memory ("RAM") **1540,** auxiliary input/output (I/O) subsystems **1542,** a serial port **1544,** a keyboard **1546,** a speaker **1548,** a microphone **1550,** other communications subsystem **1552,** and any other compatible device subsystems, which is generally designated as **1554.** Some of the subsystems shown in **Figure 11** perform communication-related functions, whereas other subsystems may provide "resident" or on-device functions. Notably, some subsystems, such as the keyboard **1546** and the display **1538,** for example, may be used for both communication-related functions, such as entering a text message for transmission over a communication network, and device-resident functions such as a calculator or task list.

Operating system software used by the microprocessor **1534** is preferably stored in a persistent store such as the flash memory **1538,** which may instead be a read-only memory ("ROM") or similar storage element (not shown). Those skilled in the art will appreciate that the operating system, specific device applications, or parts thereof, may be temporarily loaded into a volatile memory such as the RAM **1540.** Received communication signals may also be stored in the RAM **1540.**

As shown in **Figure 11,** the flash memory **1536** can be segregated into different areas for both computer programs **1556** and program data storage such as device state **1558,** an address book **1560,** personal information manager ("PIM") **1562,** and other programs **1564.** These different storage types indicate that each program can allocate a portion of the flash memory **1536** for their own data storage requirements. The microprocessor **1534,** in addition to its operating system functions, preferably enables execution of software applications on the host mobile device **1502.** A predetermined set of applications that control basic operations, including at least data and voice communication applications for example, will normally be installed on the host mobile device **1502** during manufacturing. A preferred software application may be a PIM application having the ability to organize and manage data items relating to the user of the host mobile device **1502** such as, but not limited to, e-mail, calendar events, voice mails, appointments, and task items. Naturally, one or more memory stores would be available on the host mobile device **1502** to facilitate storage of PIM data items. Such PIM application would preferably have the ability to send and receive data items, via the communication network **1504.** In a preferred embodiment, the PIM data items are seamlessly integrated, synchronized and updated, via the communication network **1504,** with the host mobile device user's corresponding data items stored or associated with a host computer system. Additional applications may also be loaded onto the host mobile device **1502** through the communication network **1504,** the auxiliary I/O subsystem **1543,** the serial port **1544,** other communications subsystem **1552** or any other compatible device subsystem **1554,** and be installed by the user in the RAM **1540** or preferably a non-volatile store (not shown) for execution by the microprocessor **1534.** Such flexibility in application installation increases the functionality of the host mobile device **1502** and may provide enhanced on-device functions, communication-related functions, or both. For example, secure communication applications may enable electronic commerce functions and other such financial transactions to be performed using the host mobile device **1502.**

In a data communication mode, a received signal such as a text message or web page download will be processed by the communication subsystem **1506** and input to the microprocessor **1534,** which preferably further processes the received signal for output to the display **1538,** or alternatively to the auxiliary I/O subsystems **1542.** The user of the host mobile device **1502** may also compose data items such as e-mail messages for example, using the keyboard **1546,** which is preferably a complete alphanumeric keyboard or telephone-type keypad, in conjunction with the display **1538** and possibly with the auxiliary I/O subsystems **1542.** Such composed items may then be transmitted over the communication network 1504 through the communication subsystem **1506.**

For voice communications, overall operation of the host mobile device **1502** is similar, except that the received signals would preferably be output to the speaker **1548** and signals for transmission would be generated by the microphone **1550.** Alternative voice or audio I/O subsystems, such as a voice message recording subsystem, may also be implemented on the host mobile device **1502.** Although voice or audio signal output is preferably accomplished primarily through the speaker **1548,** the display **1538** may also be used to provide an indication of the identity of a calling party, the duration of a voice call, or other voice call related information for example.

The serial port **1544,** such as Universal Serial Bus ("USB"), in **Figure 11** would normally be implemented in a personal digital assistant ("PDA")-type host mobile device for which synchronization with a user's desktop computer (not shown) may be desirable, but is an optional device component. The serial port **1544** would enable the user to set preferences through an external device or software application and would extend the capabilities of the host mobile device **1502** by providing for information or software downloads to host mobile device **1502** other than through a wireless communication network. An alternate download path may for example be used to load an encryption key onto the device through a direct and thus reliable and trusted connection to thereby enable secure device communication. Other communications subsystems **1552,** such as a short-range communications subsystem, is a further optional component which may provide for communication between the host mobile device **1502** and different systems or devices, which need not necessarily be similar devices. For example, the other communications subsystem **1552** may include an infrared device and associated circuits and components or a Bluetooth™ communication module to provide for communication with similarly enabled systems and devices.

Although many services may be available on a given network, only those subscribers who use mobile communications devices that have been provisioned for those services will be able to benefit from them. This limitation may present problems for both the subscriber and the network operator. On one hand, the subscriber may desire an existing service he does not have, i.e. an upgrade, or desire disabling a service, i.e. a downgrade. On the other hand the operator may want to offer a new service, but may hesitate if subscribers cannot benefit from them. One known solution is to provide an out of band communications link, such as a Universal Serial Bus ("USB"), on the mobile communications device, and enable the subscriber to load new software onto the mobile communications device via the out of band communication link using a personal computer, thus re-provisioning the mobile communications device. This solution may be an unacceptable solution to both the subscriber and the operator as there is a significant risk that the mobile communications device, by error, receives a wrong or incomplete load, and may require servicing. Furthermore, this solution may be unacceptable to the subscriber who does not have access to a personal computer. However, because the host mobile device **1502** is a host communications device that hosts the data communications client **804,** the data communications client **804** may be provisioned directly by the user of host mobile device **1502.**

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A method for transforming a display image of a device from a first orientation to a second orientation, the method comprising the steps of:
breaking up the display image into multiple sub-images; and
transforming each of said multiple sub-images individually, said transforming step including selecting a pixel, determining a transformed location for said pixel, and writing the pixel to a display buffer.

2. The method of claim 1, wherein the display image is on a mobile device.

3. The method of claim 2, wherein the mobile device comprises a predetermined cache size.

4. The method of claim 3, wherein the breaking up step comprises finding a sub-image size that fits into said cache without causing cache misses.

5. The method of claim 4, wherein said sub-image size is determined based on a number of bits for each pixel and the number of pixels in a row of the sub-image.

6. The method of any one of claims 1 to 5, wherein the breaking up step breaks the display image into two sub-images.

7. The method of any one of claims 1 to 6, wherein said breaking up step creates multiple sub-images, each sub-image having the same size.

8. The method of any one of claims 1 to 7, wherein said breaking up step creates multiple sub-images having differing sizes.

9. The method of any one of claims 1 to 8, wherein the first orientation is one of portrait or landscape, and the second orientation is the other of portrait or landscape.

10. The method of claim 9, wherein said transforming step uses a top left corner as a landscape reference and a top right corner as a portrait reference.

11. A mobile device adapted to transform a display image from a first orientation to a second orientation, the mobile device having means for breaking up the display image into multiple sub-images; and means for transforming each of said multiple sub-images individually, said means for transforming being arranged to select a pixel, determine a transformed location for said pixel, and write the pixel to a display buffer.

12. The mobile device of claim 11, wherein the mobile device comprises a cache with a predetermined cache size.

13. The mobile device of claim 12, wherein the means for breaking up comprises means for finding a sub-image size that fits into said cache without causing cache misses.

14. The mobile device of claim 13, wherein said sub-image size is determined based on a number of bits for each pixel and the number of pixels in a row of the image.

15. The mobile device of any one of claims 11 to 14, wherein the means for breaking up is adapted to break the display image into two sub-images.

16. The mobile device of any one of claims 11 to 15, wherein the means for breaking up is adapted to create multiple sub-images, each sub-image having the same size.

17. The mobile device of any one of claims 11 to 16, wherein the means for breaking up is adapted to create multiple sub-images having differing sizes.

18. The mobile device of any one of claims 11 to 17, wherein the first orientation is one of portrait or landscape, and the second orientation is the other of portrait or landscape.

19. The mobile device of claim 18, wherein said means for transforming is adapted to use a top left corner as a landscape reference and a top right corner as a portrait reference.

20. A computer program product for transforming a display image of a device from a first orientation to a second orientation, the computer program product comprising a computer readable medium embodying program code means for implementing the method of any one of claims 1 to 10.
